# FASCICULE DE BREVET EUROPEEN

(11) **EP 1 769 153 B1**
(45) Date de publication et mention de la délivrance du brevet: **14.03.2012**
(21) Numéro de dépôt: 05781877.5
(22) Date de dépôt: 29.06.2005
(51) Int. Cl.: F02D 41/40, F02D 41/02

(54) **SYSTEME DE CONTROLE DU FONCTIONNEMENT D'UN MOTEUR DIESEL DE VEHICULE AUTOMOBILE ASSOCIE A UN CATALYSEUR D'OXYDATION**
SYSTEM ZUR STEUERUNG DER ARBEITSWEISE EINES MIT EINEM OXIDATIONSKATALYSATOR VERBUNDENEM DIESELMOTORS IN EINEM KRAFTFAHRZEUG
SYSTEM FOR CONTROLLING THE FUNCTION OF A DIESEL ENGINE IN A MOTOR VEHICLE CONNECTED TO AN OXIDATION CATALYST

(30) Priorité: 15.07.2004 FR 0407885
(43) Date de publication de la demande: 04.04.2007
(73) Titulaire: Peugeot Citroën Automobiles SA, 78140 Vélizy-Villacoublay (FR)
(72) Inventeur: GRIARD, Christophe, 75017 Paris (FR)
(74) Mandataire: Pinchon, Odile
(86) Numéro de dépôt international: PCT/FR2005/050519
(87) Numéro de publication internationale: WO 2006/016080

(56) Documents cités:
- EP-A- 1 138 900
- EP-A- 1 245 814
- EP-A- 1 384 879
- EP-A- 1 400 663
- DE-A1- 10 253 979
- US-A1- 2002 078 681

## Description

La présente invention concerne un système de contrôle du fonctionnement d'un moteur Diesel de véhicule automobile associé à des moyens de dépollution comprenant un catalyseur d'oxydation et agencés dans une ligne d'échappement de ce moteur, ce catalyseur présentant au moins un état de fonctionnement non amorcé et un état de fonctionnement amorcé, et ce moteur étant également associé à des moyens d'alimentation en carburant des cylindres de celui-ci selon au moins une injection pendant leur phase de détente.

Il est constant que la combustion de carburant dans un moteur Diesel induit une émission de polluants, comme par exemple des particules d'oxyde d'azote (NOx) ou de soufre (SOx). Afin de réduire ces émissions, de manière classique, le moteur est associé à une ligne d'échappement équipée de moyens de dépollution comprenant un filtre à particule (FAP) ou un piège à NOx, par exemple, destiné à stocker de telles particules.

Les moyens de dépollution n'ayant pas une capacité de stockage illimitée, il est nécessaire de les régénérer périodiquement et/ou régulièrement. A cet effet, la ligne d'échappement comprend, en amont des moyens de dépollution un catalyseur d'oxydation adapté pour générer un exotherme en amont de ceux-ci, ce qui augmente leur température interne et aide ainsi à leur régénération.

De manière classique, un moteur Diesel est associé à des moyens d'alimentation en carburant de ses cylindres, adaptés pour alimenter les cylindres selon des injections multiples de carburant pendant leur phase de détente, ou « post-injections », ou bien décaler l'injection principale vers la phase de détente. Le carburant ainsi injecté pendant la phase de détente des cylindres est non brûlé et délivré au catalyseur pour son oxydation et pour la production de l'exotherme.

Afin que le carburant délivré au catalyseur soit oxydé de manière satisfaisante, le catalyseur doit présenter une température interne suffisante, c'est-à-dire un état de fonctionnement « amorcé ». Pour l'amener dans un tel état, les moyens d'alimentation en carburant des cylindres sont adaptés pour alimenter les cylindres selon une valeur prédéterminée d'amorçage du catalyseur.

Dans son état amorcé, le catalyseur génère alors de manière efficace un exotherme en oxydant le carburant issu de l'injection de carburant délivré par les moyens d'alimentation réglés sur une valeur d'injection prédéterminée d'entretien de l'état amorcé.

Il est connu dans l'état de la technique des systèmes de contrôle du fonctionnement d'un moteur Diesel du type susmentionné adaptés pour aider à la régénération du FAP en évaluant l'état de fonctionnement du catalyseur et en commandant la commutation entre des valeurs de post-injections sur la base de cette évaluation.

Par exemple, le brevet FR 2 804 176 décrit un tel système de contrôle qui comprend un premier et un second capteurs de température agencés dans la ligne d'échappement en amont et en aval du catalyseur respectivement. Les mesures issues de ces capteurs sont délivrées à des moyens de contrôle du fonctionnement des moyens d'alimentation adaptés pour estimer l'état du catalyseur en fonction, à la fois, des mesures de température en amont et en aval du catalyseur et commander les commutation entre valeurs de post-injection en fonction de l'état estimé du fonctionnement du catalyseur.

L'utilisation de deux capteurs a pour conséquence de multiplier la probabilité de défaillance du système, de dysfonctionnement d'un capteur, d'un mauvais calibrage de ceux-ci, ou autres, et induit un coût élevé.

Le but de la présente invention est de résoudre les problèmes susmentionnés.

A cet effet, la présente invention a pour objet de contrôle du fonctionnement d'un moteur Diesel de véhicule automobile associé à des moyens de dépollution comprenant un catalyseur d'oxydation et agencés dans une ligne d'échappement de ce moteur, ce catalyseur présentant au moins un état de fonctionnement non amorcé et un état de fonctionnement amorcé, et ce moteur étant également associé à des moyens d'alimentation en carburant des cylindres de celui-ci selon au moins une injection pendant leur phase de détente, caractérisé en ce qu'il comprend :
- un unique capteur de température placé dans la ligne d'échappement du moteur en aval du catalyseur pour mesurer la température en aval du catalyseur; et
- des moyens de commande des moyens d'alimentation en carburant des cylindres adaptés pour commander la commutation du phasage et/ou de la quantité de carburant injectée lors de la phase de détente entre une première valeur d'amorçage du catalyseur et une seconde valeur d'entretien de l'état de fonctionnement amorcé du catalyseur en fonction de la mesure de la température en aval du catalyseur.

Selon une autre caractéristique, le système est caractérisé en ce que les moyens de commande comprennent :
- des moyens d'estimation de l'état de fonctionnement du catalyseur en fonction de la température en aval du catalyseur ; et
- des moyens de pilotage adaptés pour piloter la commutation entre lesdites première et seconde valeurs d'amorçage et d'entretien l'état amorcé en fonction de l'état de fonctionnement du catalyseur estimé conformément à une loi prédéterminée de commutation.

Selon une autre caractéristique, le système est caractérisé en ce que les moyens d'estimation de l'état de fonctionnement du catalyseur comprennent:
- des moyens de formation de la dérivée temporelle de la mesure de la température en aval du catalyseur ; et
- des moyens formant cartographie dérivée/température adaptés pour estimer l'état de fonctionnement du catalyseur en fonction de l'appartenance de la mesure de la température en aval du catalyseur et de sa dérivée à une plage d'une cartographie dérivée/température prédéterminée d'au moins une première plage de fonctionnement, représentative de l'état de fonctionnement non amorcé du catalyseur, et une seconde plage de fonctionnement, représentative de l'état de fonctionnement amorcé du catalyseur.

Selon une autre caractéristique, le système est caractérisé en ce qu'il comprend en outre des moyens d'acquisition de paramètres de fonctionnement du moteur et/ou de roulage de véhicule, et en ce que les moyens d'estimation comprennent des moyens de correction de la cartographie dérivée/température prédéterminée en fonction des paramètres acquis.

Selon une autre caractéristique, le système est caractérisé en ce que les moyens d'acquisition de paramètres de fonctionnement du moteur et/ou de roulage du véhicule sont adaptés pour mesurer la température extérieure du véhicule, et en ce que les moyens de correction sont adaptés pour corriger la cartographie dérivée/température en fonction de la température extérieure mesurée.

Selon une autre caractéristique, le système est caractérisé en ce que les moyens d'acquisition de paramètres de fonctionnement du moteur et/ou de roulage du véhicule sont adaptés pour mesurer la vitesse du véhicule, et en ce que les moyens de correction de la cartographie dérivée/température sont adaptés pour corriger la cartographie dérivée/température prédéterminée en fonction de la vitesse du véhicule mesurée.

Selon une autre caractéristique, le système est caractérisé en ce qu'il comprend en outre des moyens de mesure du débit d'air en entrée du moteur, et en ce que les moyens d'estimation de l'état de fonctionnement du catalyseur comprennent des moyens formant cartographie débit/température adaptés pour estimer l'état de fonctionnement du catalyseur en fonction de l'appartenance des mesures de débit d'air et de température en aval du catalyseur à une plage d'une cartographie débit/température prédéterminée d'au moins une première plage de fonctionnement, représentative de l'état de fonctionnement non amorcé du catalyseur, et une seconde plage de plage de fonctionnement, représentative de ;'étant de fonctionnement amorcé du catalyseur.

Selon une autre caractéristique, le système est caractérisé en ce qu'il comprend en outre des moyens d'acquisition de paramètres de fonctionnement du moteur et/ou de roulage de véhicule, et en ce que les moyens d'estimation comprennent des moyens de correction de la cartographie débit/température prédéterminée en fonction des paramètres acquis.

Selon une autre caractéristique, le système est caractérisé en ce que les moyens d'acquisition de paramètres de fonctionnement du moteur et/ou de roulage du véhicule sont adaptés pour mesurer la température extérieure de véhicule, et en ce que les moyens de correction de la cartographie débit/température sont adaptés pour corriger la cartographie débit/température en fonction de la température extérieure mesurée.

Selon une autre caractéristique, le système est caractérisé en ce que les moyens d'acquisition de paramètres de fonctionnement du moteur et/ou de roulage du véhicule sont adaptés pour mesurer la vitesse du véhicule, et en ce que les moyens de correction de la cartographie dérivée/température sont adaptés pour corriger la cartographie débit/température en fonction de la vitesse du véhicule mesurée.

Selon une autre caractéristique, le système est caractérisé en ce que les moyens de dépollution comprennent, en aval du catalyseur et du capteur de température, un piège à NOx devant être régénéré régulièrement et/ou périodiquement, le catalyseur étant propre, dans son état de fonctionnement amorcé, à augmenter la température du piège à NOx pour faciliter sa régénération par combustion des particules piégées dans celui-ci, et en ce que les moyens de pilotage sont adaptés pour au moins optimiser la régénération du piège à NOx.

Selon une autre caractéristique, le système est caractérisé en ce que les moyens de dépollution comprennent, en aval du catalyseur et du capteur de température, un filtre à particules devant être régénéré régulièrement et/ou périodiquement, le catalyseur étant propre, dans son état de fonctionnement amorcé, à augmenter la température du filtre à particules pour faciliter sa régénération par combustion des particules piégées dans celui-ci, et en ce que les moyens de pilotage sont adaptés pour au moins optimiser la régénération du filtre à particule.

Selon une autre caractéristique, le système est caractérisé en ce que les moyens de pilotage sont adaptés pour piloter la commutation entre lesdites première et seconde valeurs d'amorçage et d'entretien l'état amorcé selon une loi de transition prédéterminée qui maximise un critère prédéterminé du type Qc/Qp, où Qc est quantité de chaleur dégagée en aval du catalyseur par celui-ci et Qp la quantité de polluants émis par le catalyseur, afin de minimiser la quantité de polluant émis par le catalyseur tout en maximisant la quantité de chaleur dégagée par celui-ci.

Selon une autre caractéristique, le système est caractérisé en ce que les moyens de commande comprennent des moyens de forçage de l'injection de carburant dans les cylindre lors de leur phase de détente à la première valeur d'amorçage du catalyseur dès qu'un ralenti du moteur a duré au moins une durée limite de ralenti prédéterminée, et ce pendant une durée de forçage prédéterminé après l'instant de fin d'un tel ralenti du moteur.

Selon une autre caractéristique, le système est caractérisé en ce que les moyens de forçage comprennent des moyens de détermination de la durée limite de ralenti en fonction de la mesure de la température en aval du catalyseur à l'instant du début du ralenti.

Selon une autre caractéristique, le système est caractérisé en ce que les moyens de détermination de la durée limite de ralenti comprennent :
- des moyens d'acquisition de l'instant de début du ralenti ; et
- des moyens formant cartographie de durées limites de ralenti adaptés, à l'acquisition de l'instant du début du ralenti, pour déterminer la durée limite de ralenti en évaluant, pour la mesure de la température en aval du catalyseur à l'instant du début de ralenti, une cartographie prédéterminée de valeurs de durée de ralenti en fonction de valeurs de température en aval du catalyseur.

Selon une autre caractéristique, le système est caractérisé en ce que les moyens de détermination de la durée limite de ralenti comprennent en outre des moyens de correction de la cartographie prédéterminée de valeurs de durée de ralenti en fonction de paramètres prédéterminés de fonctionnement du moteur et/ou de roulage du véhicule.

Selon une autre caractéristique, le système est caractérisé en ce que les moyens de correction de la cartographie prédéterminée de valeurs de durée de ralenti sont adaptés pour acquérir la température extérieure du véhicule et/ou de la vitesse du véhicule à l'instant de début du ralenti et pour corriger la cartographie prédéterminée de valeurs de durée de ralenti en fonction de cette température extérieure acquise et/ou de cette mesure de la vitesse acquise.

Selon une autre caractéristique, le système est caractérisé en ce que les moyens de forçage comprennent des moyens de détermination de la durée limite de forçage en fonction de la mesure de la température en aval du catalyseur à l'instant de fin du ralenti.

Selon une autre caractéristique, le système est caractérisé en ce que les moyens de détermination de la durée limite de forçage comprennent :
- des moyens d'acquisition de l'instant de fin du ralenti ; et
- des moyens formant cartographie de durée de forçage adaptés, à l'instant de fin du ralenti, pour déterminer la durée de forçage en évaluant, pour la mesure de la température en aval du catalyseur à l'instant de fin du ralenti, une cartographie prédéterminée de valeurs de durée de forçage en fonction de valeurs de température en aval du catalyseur.

Selon une autre caractéristique, le système est caractérisé en ce que les moyens de détermination de la durée limite de forçage comprennent en outre des moyens de correction de la cartographie prédéterminée de valeurs de durée de forçage en fonction de paramètres prédéterminés de fonctionnement du moteur et/ou de roulage du véhicule.

Selon une autre caractéristique, le système est caractérisé en ce que les moyens de correction de la cartographie prédéterminée de valeurs de durée de forçage sont adaptés pour acquérir la température extérieure du véhicule et/ou la vitesse du véhicule à l'instant de fin du ralenti et pour corriger, la cartographie prédéterminée de valeurs de durée de forçage en fonction de cette température extérieure du véhicule acquise et/ou de cette mesure de la vitesse du véhicule acquise.

Selon une autre caractéristique, le système est caractérisé en ce qu'il comprend en outre des moyens de diagnostic de l'état de fonctionnement du capteur de température en aval du catalyseur, et en ce que les moyens de pilotage sont adaptés pour mettre en oeuvre une stratégie prédéterminée de commutation par défaut si le capteur de température est diagnostiqué comme défaillant.

La présente invention sera mieux comprise à la lecture de la description qui va suivre, donnée uniquement à titre d'exemple et faite en relation aux dessins annexés dans lesquels :
- la figure 1 est une vue schématique d'un système de contrôle selon l'invention associé à un moteur Diesel ;
- la figure 2 est une vue schématique des moyens de commande des moyens d'alimentation entrant dans la constitution du système de la figure 1 ;
- la figure 3 est une vue schématique des moyens d'estimation de l'état du catalyseur sur la base de la mesure de la température en aval du catalyseur et de sa dérivée et entrant dans la constitution des moyens de commande de la figure 2 ;
- la figure 4 est un graphique d'une cartographie dérivée/température mise en oeuvre par les moyens d'estimation de la figure 3 ;
- la figure 5 est une vue schématique des moyens d'estimation de l'état du catalyseur sur la base du débit d'air entrant dans le moteur et de la mesure de la température en aval du catalyseur et entrant dans la constitution des moyens de commande de la figure 2 ;
- la figure 6 est un graphique d'une cartographie débit d'air/température mise en oeuvre par les moyens d'estimation de la figure 5 ;
- la figure 7 est une vue schématique des moyens de pilotage des commutations entrant dans la constitution des moyens de commande de la figure 2 ;
- la figure 8 est une vue schématique des moyens de forçage entrant dans la constitution des moyens de commande de la figure 2 ; et
- les figures 9A à 9D sont des chronogrammes illustrant le fonctionnement des moyens de forçage de la figure 8.

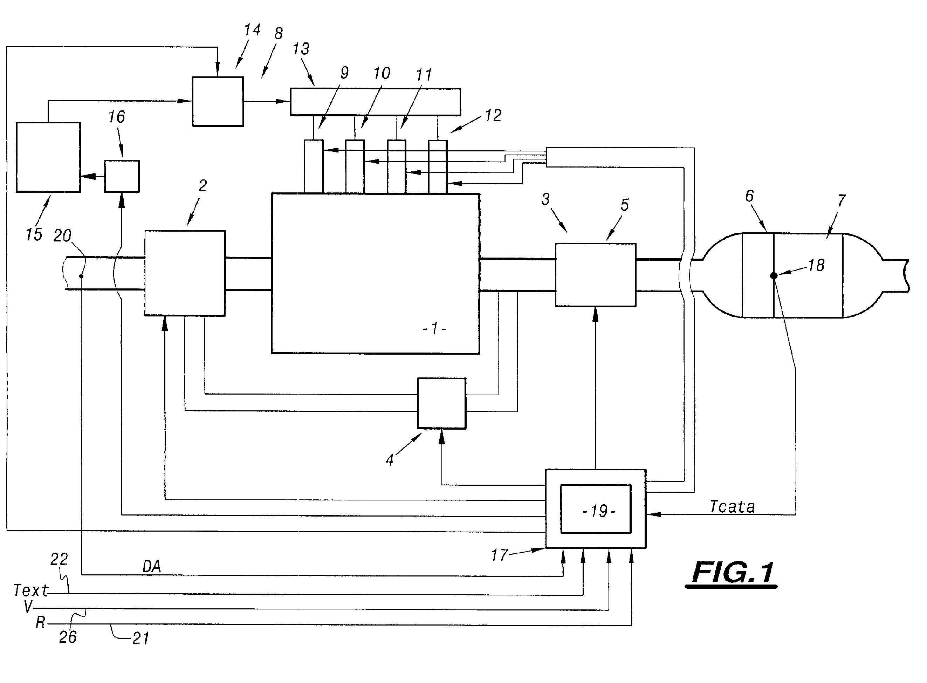

Sur la figure 1, on a illustré de façon schématique un moteur Diesel 1 pour véhicule automobile.

Ce moteur est associé à des moyens 2 d'admission d'air en entrée de celui-ci et à une ligne 3 d'échappement des gaz brûlés. Des moyens 4 de recyclage d'une partie des gaz d'échappement (EGR) sont également prévus et par exemple agencés entre la sortie du moteur et les moyens 2 d'admission d'air.

De manière classique, la ligne d'échappement est également associée à un turbocompresseur 5 et plus particulièrement la partie de turbine de celui-ci.

Pour limiter l'émission de polluants, et notamment l'émission de particules d'oxyde d'azote et/ou de soufre, la ligne d'échappement comprend en outre des moyens 6, 7 de dépollution comprenant un catalyseur d'oxydation 6 et, par exemple, un filtre à particules 7 placé en aval du catalyseur.

Bien entendu, des moyens de dépollution peuvent comprendre un catalyseur d'oxydation associé à un piège à NOx.

Le catalyseur 6 présente de manière classique au moins deux états de fonctionnement, à savoir un état de fonctionnement amorcé dans lequel sa température interne est suffisamment élevée pour brûler des hydrocarbures délivrés par le moteur et un état de fonctionnement non amorcé dans lequel sa température est trop basse pour effectuer une telle opération.

Comme cela est connu en soi dans l'état de la technique, le catalyseur 6 est prévu dans la ligne d'échappement pour générer en entrée du FAP, un exotherme par oxydation de carburant. Cet exotherme permet alors d'augmenter la température interne du FAP, facilitant ainsi sa régénération.

Le moteur 1 est également associé à des moyens 8 d'alimentation en carburant des cylindres de celui-ci, dans cet exemple au nombre de quatre, au moyen d'injecteurs 9, 10, 11, 12, à commande électrique par exemple.

Les moyens 8 d'alimentation peuvent également comprendre une rampe commune d'alimentation 13, raccordée aux injecteurs 9, 10, 11, 12 et reliée à une pompe à haute pression 14 pour son d'approvisionnement en carburant à partir d'un réservoir 15 de carburant.

Le réservoir 15 peut être associé à des moyens d'ajout au carburant d'un additif, stocké dans un réservoir auxiliaire 16 et destiné à se déposer sur le FAP pour abaisser la température de combustion des particules piégées dans celui-ci, et donc aider à sa régénération.

Le moteur et les différents organes qui viennent d'être décrits sont également associés à un système de contrôle de leur fonctionnement. Ce système comporte notamment des moyens 17 de contrôle, comprenant tout calculateur approprié, raccordés à un ensemble prédéterminé de moyens d'acquisition d'informations relatives au fonctionnement du moteur, des organes associés et/ou de conditions de roulage du véhicule.

Les moyens 17 de contrôle sont propres à délivrer un ensemble de signaux de commande de fonctionnement, au moteur et aux organes associés, en fonction des informations acquises, comme cela est connu en soi dans l'état de la technique.

Par exemple, le système de contrôle du fonctionnement du moteur est adapté pour commander les moyens 8 d'alimentation en carburant des cylindres pour l'alimentation en carburant de ces derniers selon au moins une injection principale, et une injection pilote destinée à minimiser le bruit de combustion dans le moteur 1.

Le système de contrôle du fonctionnement du moteur est par ailleurs adapté pour piloter les moyens 8 d'alimentation en carburant pour qu'ils délivrent au moins une injection de carburant dans les cylindres pendant la phase de détente de ceux-ci, par exemple des injections multiples ou « post-injections », afin de commander l'état de fonctionnement du catalyseur 6 pour optimiser l'émission de polluants par le moteur du véhicule.

Bien entendu, en variante, le système de contrôle peut être adapté pour piloter les moyens 8 d'alimentation pour qu'ils décalent l'injection principale de carburant dans les cylindres vers la phase de détente de ceux-ci, afin également de commander l'état de fonctionnement du catalyseur 6 pour optimiser l'émission de polluants.

Le système de contrôle est notamment adapté pour commander, conformément à une stratégie prédéterminée de commande de commutation, la commutation du phasage et/ou de la quantité de carburant injectée lors de la phase de détente, dans cet exemple lors des post-injections, entre une valeur d'amorçage du catalyseur 6 et une valeur d'entretien de l'état de fonctionnement amorcé du catalyseur 6, comme cela sera expliqué plus en détail par la suite.

La valeur d'amorçage du catalyseur des post-injections est notamment destinée à élever la température interne du catalyseur jusqu'à une température prédéterminée permettant à celui-ci d'oxyder des quantités plus importantes de carburant issues des post-injections.

La valeur d'entretien de l'état amorcé du catalyseur des post-injections est quant à elle destinée à générer un exotherme pour élever la température en amont du FAP par conversion du carburant envoyé sur le catalyseur, la quantité de carburant délivré par de telles post-injections étant d'autant plus élevée qu'il est désiré un exotherme important en amont du FPA.

Pour la commande de commutation, le système de contrôle comprend un unique capteur 18 de température placé dans la ligne d'échappement 3 en aval du catalyseur 6 pour mesurer la température Tcata en aval du catalyseur et des moyens 19 de commande des moyens 8 d'alimentation recevant en entrée la mesure Tcata de température du capteur 18 et adaptés pour commander la commutation entre les valeurs de post-injections en fonction de celle-ci.

Les moyens 19 de commande sont par exemple agencés dans les moyens 17 de contrôle qui disposent des capacités de calcul et de mémorisation suffisantes pour mettre en oeuvre la stratégie prédéterminée de commande de commutation. Bien entendu, les moyens 19 de commande peuvent également consister en des moyens indépendants des moyens 17 de contrôle, comme par exemple une unité de traitement d'informations spécifique.

Le système selon l'invention comprend en outre des moyens 20 d'acquisition du débit d'air DA en entrée du moteur et des moyens 21 d'acquisition du ralenti R du moteur, par exemple des moyens d'acquisition de la demande d'accélération du conducteur au moyen d'une pédale d'accélération. Ces acquisitions sont délivrées aux moyens 19 de commande, qui les utilisent pour la mise en oeuvre de certaines parties de la stratégie prédéterminée de commande de commutation, comme cela sera expliqué plus en détail par la suite.

Enfin, de manière avantageuse, la stratégie de commande susmentionnée est paramétrable en temps réel pour tenir compte des caractéristiques instantanées du fonctionnement du moteur et/ou de roulage du véhicule. Les paramètres de cette stratégie sont déterminés par les moyens 19 de commande en fonction de mesures de grandeurs prédéterminées telles que la température extérieure Text et la vitesse V du véhicule par exemple, comme cela sera expliqué également plus en détail par la suite. A cet effet, le système de contrôle selon l'invention comprend en outre un capteur 23 de température extérieure Text du véhicule et des moyens 24 d'acquisition de la vitesse V du véhicule.

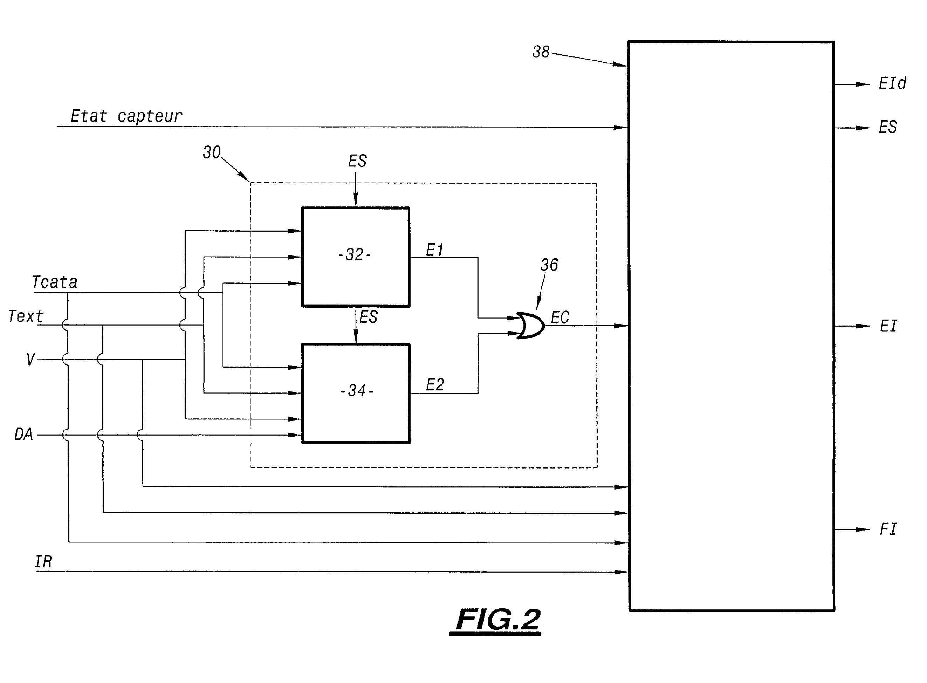

La figure 2 est une vue schématique des moyens 19 de commande des moyens d'alimentation mettant en oeuvre la stratégie de commutation entre les valeurs de post-injections.

Les moyens 19 de commande comprennent des moyens 30 d'estimation de l'état de fonctionnement du catalyseur recevant en entrée la mesure de température Tcata en aval du catalyseur et adaptés pour estimer l'état du catalyseur en fonction de cette dernière.

De manière avantageuse, les moyens 30 d'estimation comprennent des premiers et seconds moyens 32, 34 d'estimation mettant en oeuvre deux estimations distinctes de cet état et délivrant des états estimés E1 et E2 respectivement. Ceci permet notamment d'obtenir une redondance de l'estimation de l'état du catalyseur et donc une fiabilité accrue de celle-ci.

Les états estimés du catalyseur E1, E2 sont délivrés à des moyens 36 de sélection d'un des états estimés, E1, E2, par exemple en se fondant sur un critère de préférence, un critère temporel ou autres.

On adoptera ci-après la convention selon laquelle la valeur de l'état estimé du fonctionnement du catalyseur prend la valeur 0 quand il s'agit de l'état de fonctionnement non amorcé et la valeur 1 quand il s'agit de l'état de fonctionnement amorcé.

Un premier mode de réalisation des moyens 36 de sélection consiste par exemple en des moyens réalisant la fonction « OU » logique, de sorte que la sélection entre les états estimés E1 et E2 est réalisée par préférence de l'état de fonctionnement amorcé.

Un autre mode de réalisation des moyens 36 de sélection consiste par exemple en des moyens sélectionnant l'état estimé présentant la variation la plus récente de sa valeur, de sorte qu'il est privilégié l'estimation de l'état de fonctionnement du catalyseur ayant la dynamique la plus rapide afin d'obtenir une stratégie de commutation entre les valeurs de post-injection réactive.

Les moyens 36 de sélection délivrent l'état sélectionné, désigné EC, à des moyens 38 de pilotage. Les moyens 38 de pilotage sont adaptés pour piloter la commutation entre les valeurs de post-injections en fonction de l'état EC estimé du catalyseur, comme cela sera expliqué plus en détail par la suite.

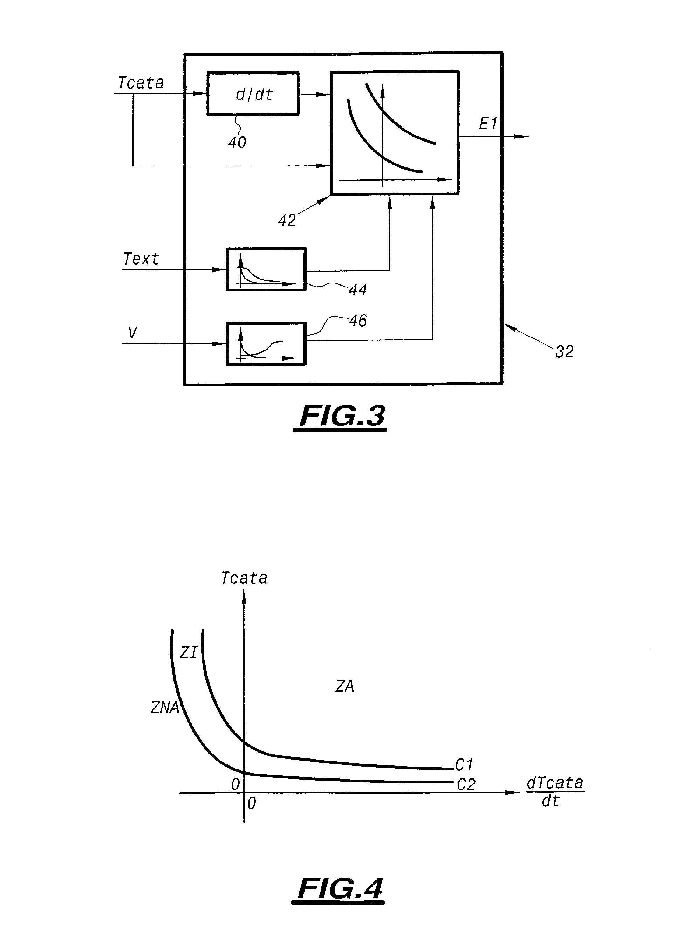

Il va maintenant être décrit plus en détails la structure et le fonctionnement des premiers moyens 32 d'estimation en relation avec les figures 3 et 4.

Les moyens 32 d'estimation comprennent des moyens 40 de formation de la dérivée temporelle dTcata/dt de la mesure de la température en aval du catalyseur reçue du capteur 18 de température. Par exemple, le capteur 18 de température contient un convertisseur analogique/numérique et les moyens 40 de formation de la dérivée mettent en oeuvre un filtre numérique de dérivation de cette mesure numérique pour obtenir une dérivée temporelle numérique.

Les moyens 40 de formation de la dérivée peuvent également comprendre des moyens de filtrage et/ou de saturation pour obtenir une dérivée lissée et/ou comprise dans une plage utile de valeurs.

Les moyens 32 d'estimation comprennent par ailleurs des moyens 42 formant cartographie dérivée/température recevant en entrée la mesure de la température Tcata et sa dérivée dTcata/dt. Ces moyens 42 sont adaptés pour estimer l'état de fonctionnement du catalyseur en fonction de l'appartenance de la mesure de la température Tcata en aval du catalyseur et de sa dérivée dTcata/dt à une plage d'une cartographie dérivée/température prédéterminée d'au moins une première plage ZNA de fonctionnement, représentative de l'état de fonctionnement non amorcé du catalyseur, et une seconde plage ZA de fonctionnement, représentative de l'état de fonctionnement amorcé du catalyseur.

Un exemple d'une telle cartographie est illustre sur la figure 4.

La figure 4 est un graphe ayant en ordonnée la dérivée temporelle dTcata/dt de la température en aval du catalyseur et en abscisse la température Tcata en aval du catalyseur. La cartographie comprend deux courbes distinctes C1 et C2, par exemple déterminées lors d'une étude antérieure et mémorisées sous forme d'une table de correspondance dans les moyens 42 formant cartographie.

Ces courbes C1 et C2 définissent trois plages, à savoir la plage ZNA représentative de l'état de fonctionnement non amorcé du catalyseur, la plage ZA représentative de l'état de fonctionnement amorcé du catalyseur et une plage ZI indéterminée.

Si on désigne par E1(kΔt) l'état estimé du fonctionnement du catalyseur au k^{ième} instant d'échantillonnage, C(kΔt) et C((k+1)Δt) les valeurs du couple (dTcata/dt,Tcata) aux k^{ième} et (k+1)^{ième} instants d'échantillonnage respectivement, alors l'état estimé E1((k+1)Δt) du fonctionnement du catalyseur au (k+1)^{ième} instant d'échantillonnage est déterminé par les moyens 42 formant cartographie selon le tableau 1 ci-dessous :

**Tableau 1**

| **Appartenance de C(kΔt)** | **Appartenance de C((k+1)Δt)** | **Valeur estimée de E1((k+1)Δt)** |
|---|---|---|
| ZNA | ZNA | 0 |
| ZNA | ZI | 0 |
| ZNA | ZA | 1 |
| ZI | ZNA | 0 |
| ZI | ZI | E1(kΔt) |
| ZI | ZA | 1 |
| ZA | ZA | 1 |
| ZA | ZI | 1 |
| ZA | ZNA | 0 |

Dans un autre mode de réalisation des moyens 42 formant cartographie, la cartographie dérivée/température ne comprend qu'une seule courbe et donc la plage indéterminée ZI n'existe pas. L'état estimé E1((k+1)Δt) de fonctionnement correspond alors à la plage à laquelle le couple C((k+1)Δt) appartient. Cependant, lorsque le couple C((k+1)Δt) est sensiblement proche de la courbe délimitant les plages ZNA et ZA, une oscillation de l'estimation peut être observée, du fait des franchissements successifs de cette limite par le couple (dTcata/dt,Tcata) provoqués par l'erreur sur la mesure de température, la précision numérique du système de contrôle, la formation de la dérivée ou des oscillations dans le fonctionnement du moteur par exemple. Ainsi l'introduction de la plage indéterminée ZI est particulièrement avantageuse pour minimiser une telle oscillation.

Par ailleurs, les moyens 42 formant cartographie peuvent également comprendre des moyens d'anti-rebond consistant à valider l'estimation si l'état estimé est constant pendant une durée prédéterminée.

Les moyens 32 d'estimation reçoivent en outre en entrée les paramètres de fonctionnement du moteur et/ou de roulage du véhicule des moyens d'acquisition associés, notamment la mesure de la température extérieure Text et de la vitesse V du véhicule, afin de corriger en temps réel la cartographie des moyens 42 afin de mettre en oeuvre une estimation adaptative de l'état de fonctionnement du catalyseur.

Plus particulièrement, la mesure de la température extérieure Text du véhicule est délivrée à des moyens 44 de correction de la cartographie dérivée/température. Ces moyens 44 de correction sont par exemple adaptés pour déterminer un paramètre correctif, par exemple par interrogation d'une table de correspondance mémorisée dans les moyens 44 de correction, en fonction de la mesure de la température extérieure Text pour chaque valeur des courbes C1 et C2 mémorisées dans la table de correspondance des moyens 42 de cartographie et pour multiplier chaque valeur des courbes C1 et C2 par le paramètre correctif déterminé associé.

Si les moyens 42 formant cartographie estiment l'état du catalyseur en déterminant la position du couple (dTcata/dt,Tcata) par rapport à chacune des courbes C1 et C2 en évaluant la valeur de cette courbe pour la dérivée dTcata/dt, c'est-à-dire en calculant une valeur *T* = *C*1(*dTcataldt*) dans l'exemple de la courbe C1, puis en comparant cette valeur T à la mesure de la mesure de la température Tcata pour déterminer la position du couple (dTcata/dt, Tcata) par rapport à C1, un mode de réalisation des moyens 44 de correction consiste à déterminer, en fonction de la mesure de la température extérieure Text, un paramètre correctif p et à multiplier la valeur T par le paramètre p, obtenant ainsi une nouvelle valeur T' = p x T' servant à la comparaison avec Tcata pour déterminer la position du couple pour la mesure de la température extérieure Text par rapport à la courbe C1.

D'une manière analogue, la mesure de la vitesse V du véhicule est délivrée à des moyens 46 de correction de la cartographie dérivée/température adaptés pour déterminer un paramètre correctif pour chaque valeur de C1 et C2 mémorisée dans les moyens 42 en fonction de la mesure de la vitesse V, et pour multiplier chaque valeur de C1 et C2 par le paramètre correctif associé. Sinon les moyens 46 de correction peuvent être adaptés pour déterminer un paramètre correctif q en fonction de la mesure de la vitesse V du véhicule et multiplier la valeur T ou T' susmentionné par la valeur q.

Dans un autre mode de réalisation, les moyens 44 et 46 de correction sont adaptés pour sélectionner une cartographie dérivée/température parmi un ensemble prédéterminé de cartographies mémorisé dans les moyens 42 de cartographie en fonction de la mesure de la température Text et de la vitesse V du véhicule.

De manière avantageuse, la correction de la cartographie des moyens 42 formant cartographie est réalisée avant chaque estimation de l'état de fonctionnement du catalyseur afin d'obtenir une estimation robuste.

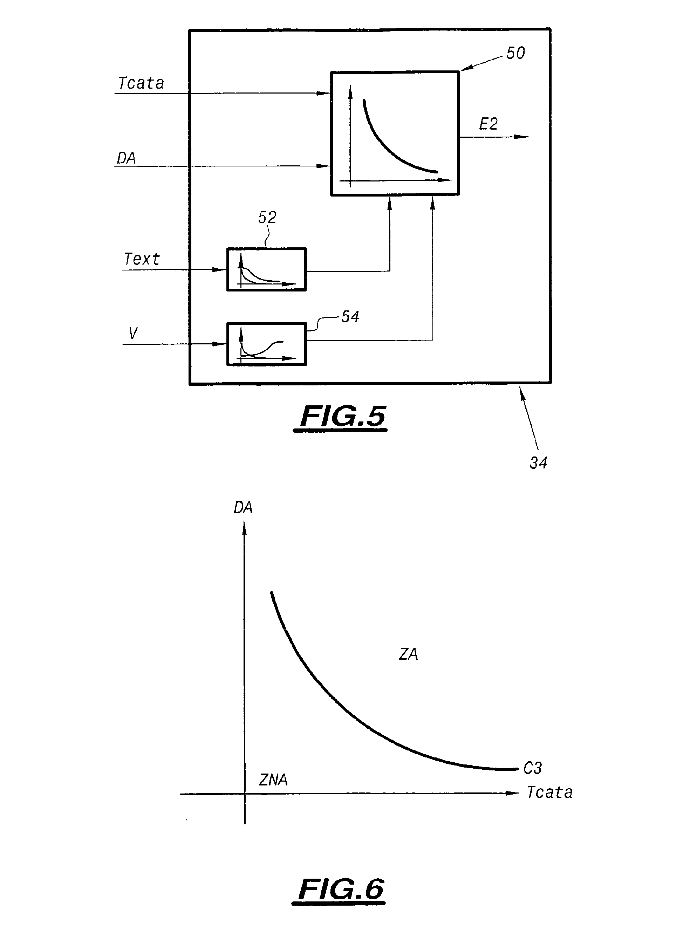

Il va maintenant être décrit plus en détails la structure et le fonctionnement des seconds moyens 34 d'estimation en relation avec les figures 5 et 6.

Les seconds moyens 34 d'estimation fonctionnent d'une manière analogue à celle des premiers moyens 32 d'estimation décrits en regard des figures 3 et 4. ils comprennent des moyens 50 formant cartographie débit/température recevant en entrée les mesures de la température Tcata en aval du catalyseur et du débit d'air DA. Ces moyens 50 formant cartographie sont adaptés pour estimer l'état de fonctionnement du catalyseur en fonction de l'appartenance des ces mesures à une plage d'une cartographie débit/température prédéterminée d'au moins une première plage ZNA de fonctionnement, représentative de l'état de fonctionnement non amorcé du catalyseur, et une seconde plage ZA de plage de fonctionnement, représentative de l'état de fonctionnement amorcé du catalyseur.

Un exemple d'une telle cartographie est illustré sur la figure 6 qui est un graphe ayant en ordonnée le débit d'air DA en entrée du moteur et en abscisse la température Tcata en aval du catalyseur. La cartographie débit d'air/température des moyens 50 formant cartographie comprend une courbe C3, par exemple déterminée lors de l'étude antérieure et mémorisée sous forme d'une table de correspondance dans les moyens 50 formant cartographie. Cette courbe C3 délimite la plage ZNA représentative de l'état de fonctionnement non amorcé du catalyseur et la plage ZA représentative de l'état de fonctionnement amorcé du catalyseur.

Si le couple de valeurs (DA, Tcata) appartient à la plage ZNA alors l'état estimé E2 de fonctionnement, délivré par les moyens 50 formant cartographie, est l'état non amorcé du catalyseur. De même, l'état E2 délivré par les moyens 50 est l'état de fonctionnement amorcé si le couple de valeurs (DA, Tcata) appartient à la plage ZA.

Un autre mode de réalisation des moyens 50 formant cartographie se fonde sur une cartographie constituée de deux courbes permettant de définir une plage indéterminée ZI entre les plages ZNA et ZA. Le fonctionnement de l'estimation en fonction des mesures du débit d'air DA et de la température Tcata en aval du catalyseur est alors analogue à celui décrit en relation avec les figures 3 et 4 concernant les moyens d'estimation de la figure 3.

La cartographie débit d'air/température des moyens 50 est par ailleurs corrigée par des moyens 52, 54 de correction en fonction des mesures de la température extérieure Text et de vitesse V du véhicule qu'ils reçoivent en entrée respectivement, d'une manière analogue à celle décrite pour les moyens 44, 46 de correction de la figure 3.

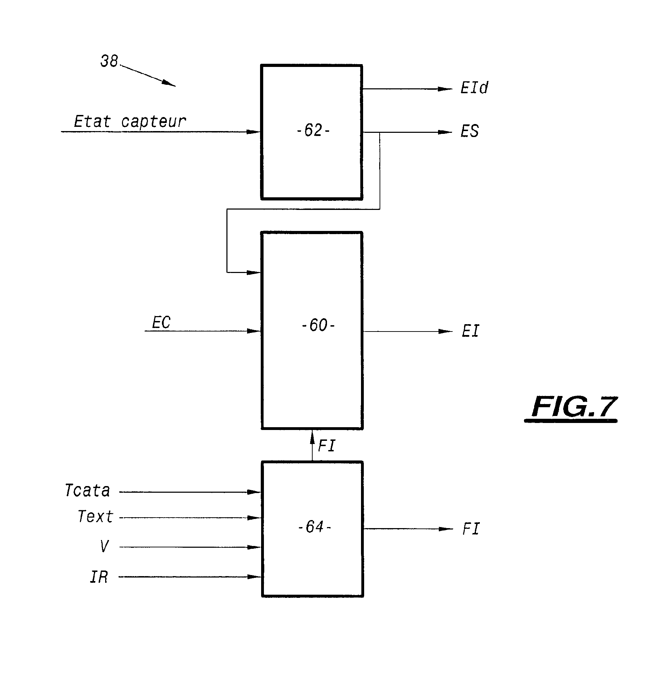

Sur la figure 7, on a illustré de façon schématique la structure des moyens 38 de pilotage de la figure 2.

Les moyens de pilotage comprennent des moyens 60 principaux de pilotage adaptés pour commander la commutation des post-injections de carburant dans les cylindres par l'envoi d'un signal de commande EI aux moyens d'alimentation en fonction de l'état estimé EC du fonctionnement du catalyseur qu'il reçoivent en entrée.

Plus particulièrement, ces moyens 60 principaux de pilotage commandent les commutations selon une loi prédéterminée de manière à maximiser la quantité Qc de chaleur dégagée par le catalyseur pour la régénération du FAP, tout en mettant en oeuvre une loi de commande minimisant la quantité Qp de polluant émise par celui-ci, par exemple en maximisant un critère du type Qc/Qp.

Par exemple, lorsque l'état estimé du catalyseur est l'état amorcé, les moyens 60 principaux de pilotage commande la commutation des post-injections à leur valeur d'entretien de l'état amorcé du catalyseur. Ainsi, le réglage des post-injections à leur valeur d'entretien est réalisé quand le catalyseur est dans son état amorcé et donc apte à oxyder une grande quantité de carburant, ce qui limite l'émission de polluants, notamment l'émission d'hydrocarbures non brûlés par le catalyseur, tout en imposant que le catalyseur soit alimenté en grande quantité de carburant pour générer une quantité de chaleur maximale en amont du FAP.

Bien entendu d'autres lois de commande de commutation peuvent être mises en oeuvre par les moyens 60 principaux de pilotage.

Les moyens de pilotage comprennent par ailleurs des moyens 62 secondaires de pilotage adaptés pour piloter les commutations de post-injections selon un mode dégradé de fonctionnement. Ceux-ci reçoivent en entrée un signal représentatif de l'état du capteur en aval du catalyseur ou peuvent comprendre des moyens de diagnostic de l'état de celui-ci. Si ce capteur présente une défaillance, les moyens 62 de pilotage émettent par exemple un signal d'inhibition ES des moyens 30 d'estimation et des moyens 60 de pilotage principaux et délivrent en sortie un signal de commande de commutation par défaut, par exemple la commutation des post-injections sur leur valeur d'entretien de l'état de fonctionnement amorcé du catalyseur afin de privilégier la régénération du filtre à particule vis-à-vis de l'émission de polluants par le catalyseur.

Enfin, les moyens de pilotage comprennent des moyens 64 de forçage adaptés pour forcer les post-injections à leur valeur d'amorçage. Les moyens 64 de forçage sont propres à bloquer les post-injections à leur valeur d'amorçage lorsque que le moteur est au ralenti au moins pendant une durée prédéterminée. Ainsi, une accélération déclenchée par le conducteur consécutive à un tel ralenti, n'induit pas une émission de polluants excessive, notamment de carburant non oxydé par le catalyseur refroidi lors du ralenti.

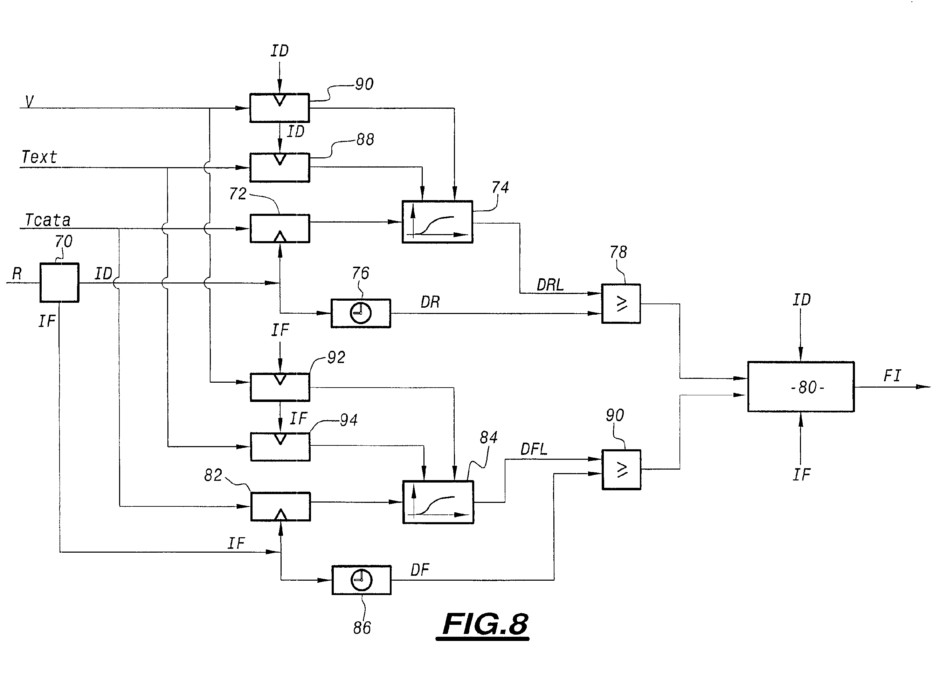

La structure des moyens 64 de forçage est illustrée de façon schématique sur la figure 8.

Les moyens 64 de forçage reçoivent en entrée le ralenti R acquis et les mesures de la température Tcata en aval du catalyseur, de la température extérieure Text et de la vitesse V du véhicule.

Ces moyens 64 de forçage comprennent des moyens 70 d'acquisition de l'instant de début ID et de l'instant de fin IF d'un ralenti déclenché par le conducteur du véhicule par exemple.

Lorsque les moyens 70 d'acquisition détectent le début du ralenti, ceux-ci acquièrent l'instant de début ID de celui-ci qu'ils délivrent à des moyens 72 qui acquièrent en réponse la valeur de la mesure de la température Tcata à cet instant.

La valeur de cette mesure de température Tcata est alors délivrée à des moyens 74 formant cartographie de durées limites de ralenti qui déterminent une durée limite de ralenti DRL correspondant à la durée minimale que le moteur doit passer au ralenti pour impliquer un forçage des post-injections à leur valeur d'amorçage. A cet effet, les moyens 74 évaluent, pour la valeur de la mesure de la température Tcata à l'instant de début du ralenti, une cartographie prédéterminée de valeurs de durée de ralenti, par exemple mise en oeuvre sous la forme d'une table de correspondance dans ceux-ci, et délivrant en sortie la durée limite de ralenti DRL correspondante.

L'instant du début du ralenti est également délivré à un compteur 76 qui commence à compter la durée du ralenti dès l'instant du début de celui-ci. La sortie DR de ce compteur 76 et la durée limite de ralenti DRL sont délivrés à des moyens 78 de comparaison de la valeur DR du compteur 76 à la durée de ralenti limite DRL qui délivrent le résultat de cette comparaison à des moyens 80 de commande de forçage. Si la durée du ralenti DR est supérieure ou égale à la durée de ralenti limite DRL, les moyens 80 de commande commandent alors le forçage des post-injections à leur valeur d'amorçage.

Par ailleurs, dès que les moyens 70 d'acquisition détectent la fin du ralenti, ils acquièrent l'instant IF de fin de celui-ci et le délivrent aux moyens 80 de commande de forçage.

Si ces derniers ont commandé le forçage des post-injections, c'est-à-dire si la valeur DR du compteur 76 est supérieure ou égale à la durée de ralenti limite DRL, alors l'instant du fin du ralenti IF est également délivré à des moyens 82 d'acquisition de la mesure de la température Tcata à cet instant. Des moyens 84 de cartographie déterminent alors une durée limite de forçage DLF des post-injections à leur valeur d'amorçage en évaluant une cartographie prédéterminée de valeurs de durée de forçage, par exemple mise en oeuvre sous la forme d'une table de correspondance, en fonction de la valeur de la mesure de température Tcata qu'ils reçoivent en entrée.

L'instant de fin de ralenti IF est également délivré à un compteur 86 de durée de forçage qui débutent à compter, dès la réception de l'instant de fin du ralenti, le temps passé dans l'état de forçage.

La valeur DF du compteur 86 et la durée limite de forçage DLF sont délivrés à des moyens 90 de comparaison de la valeur DF du compteur 90 à la durée de forçage limite DLF et délivrent le résultat de cette comparaison aux moyens 80 de commande de forçage.

Lorsque la valeur DF du compteur 90 est supérieure ou égale à la durée limite DLF de forçage, les moyens 80 de commande forçage annulent alors le forçage des post-injections, le pilotage des commutations entre les différentes valeurs de post-injections devenant à nouveau possible en fonction de l'état estimé de fonctionnement du catalyseur.

Les moyens de forçage comprennent en outre des moyens 88, 90, 92, 94 de correction des cartographies de durées limites de ralenti et de durées limites de forçage des moyens formant cartographie 74 et 84 en fonction de paramètres de fonctionnement du moteur et/ou de conditions de roulage du véhicule, notamment la température extérieure Text et/ou la vitesse V du véhicule.

Des moyens 88 de correction reçoivent en entrée la mesure de la température extérieure Text, et acquièrent sa valeur à l'instant de fin de ralenti IF. Ces moyens 88 de correction déterminent ensuite, en fonction de la mesure de Text à cet instant IF, un paramètre correctif, par exemple par interrogation d'une table de correspondance mémorisée dans ces moyens 88, et multiplient la sortie des moyens 74 par le paramètre correctif déterminé afin de réaliser une correction de la cartographie de durées limites de temps de ralenti.

Les moyens de forçage comprennent également des moyens 90 de correction de la cartographie susmentionnée en fonction de la mesure de la vitesse V du véhicule à l'instant du début de ralenti et des moyens 92, 94 de correction de la cartographie de durées limites de forçage en fonction de la mesure de la température extérieure Text et de la mesure de la vitesse V du véhicule à l'instant de fin de ralenti respectivement. Ces moyens 90, 92, 94 de correction fonctionnent d'une manière analogue à celle des moyens 88 de correction décrite ci-dessus.

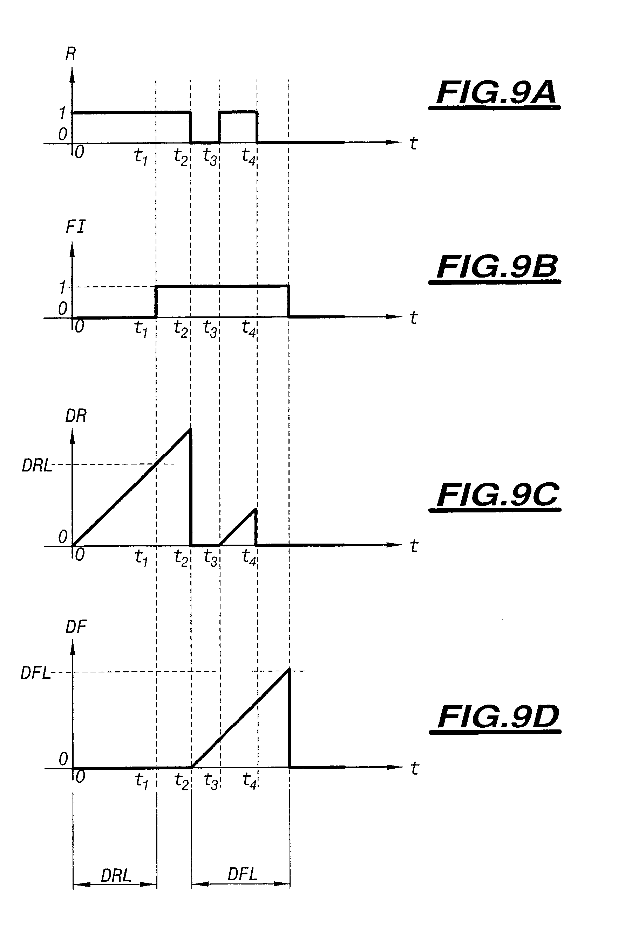

Les figures 9A-9D sont des chronogrammes illustrant le fonctionnement des moyens 64 de forçage.

On adopte sur ces figures la convention selon laquelle la sortie FI des moyens de forçage est égale à 1 lorsque le forçage des post-injections à leur valeur d'amorçage est effectif et à 0 sinon, un ralenti R est égal à 1 quand il est réalisé et 0 sinon.

Sur la figure 9A, un ralenti est déclenché à l'instant 0. La valeur de durée de ralenti limite DRL est alors déterminée par les moyens 72, 74, 88 et 90 de la manière décrite ci-dessus en regard de la figure 8 et le compteur 76 commence à compter le temps passé DR par le moteur dans ce ralenti.

Lorsque la valeur DR du compteur 76 est égale, à l'instant t1 = DRL, à la durée limite de ralenti DRL, les moyens 80 de commande déclenchent le forçage des post-injections à leur valeur d'amorçage.

A l'instant t2, la fin de ralenti est déclenchée, par exemple par le conducteur du véhicule, et la durée limite de forçage est alors déterminée par les moyens 82, 84, 92 et 94 DFL de la manière décrite ci-dessus en regard de la figure 8. Le compteur 86 commence alors à compter le temps passé DF dans l'état de forçage des post-injections.

A l'instant t3, un nouveau ralenti est déclenché et s'achève à l'instant t4. Comme la durée de ce ralenti n'est pas supérieure à une durée de ralenti limite calculée en réponse au déclenchement de ce dernier, le forçage des post-injections n'est pas réinitialisé et le forçage des post-injections induit par le premier ralenti se poursuit de manière normale.

Lorsque la valeur DF du compteur 84 est égale à la durée limite de forçage DFL, les moyens 80 de commande annulent alors le forçage.

Bien entendu, d'autres modes de réalisation sont possibles. Il a été décrit ci-dessus en regard des figures 1 à 9, un mode complet de réalisation du système selon l'invention.

D'autres modes de réalisation de ce système consistent par exemple à mettre en oeuvre, pour l'estimation de l'état de fonctionnement du catalyseur, uniquement les moyens d'estimation se fondant sur le mesure de la température en aval du catalyseur et de sa dérivée et/ou à ne pas mettre en oeuvre les moyens de forçage.

## Revendications

1. Système de contrôle du fonctionnement d'un moteur Diesel (1) de véhicule automobile associé à des moyens (6, 7) de dépollution comprenant un catalyseur d'oxydation (6) et agencés dans une ligne d'échappement (3) de ce moteur (1), ce catalyseur (6) présentant au moins un état de fonctionnement non amorcé et un état de fonctionnement amorcé, et ce moteur (1) étant également associé à des moyens (8) d'alimentation en carburant des cylindres de celui-ci selon au moins une injection pendant leur phase de détente, **caractérisé en ce qu'**il comprend :
- un unique capteur (18) de température placé dans la ligne d'échappement (3) du moteur en aval du catalyseur (6) pour mesurer la température en aval du catalyseur ;
- des moyens (19) de commande des moyens (8) d'alimentation en carburant des cylindres adaptés pour commander la commutation du phasage et/ou de la quantité de carburant injectée lors de la phase de détente entre une première valeur d'amorçage du catalyseur et une seconde valeur d'entretien de l'état de fonctionnement amorcé du catalyseur en fonction de la mesure de la température en aval du catalyseur,
- des moyens (30) d'estimation de l'état de fonctionnement du catalyseur (6) en fonction de la température en aval du catalyseur, lesdits moyens d'estimation comprenant des moyens (40) de formation de la dérivée temporelle de la mesure de la température en aval du catalyseur ou des moyens (20) de mesure du débit d'air en entrée du moteur et des moyens (42, 50) formant cartographie dérivée/température ou débit/température, adaptés pour estimer l'état de fonctionnement du catalyseur en fonction de l'appartenance de la mesure de la température en aval du catalyseur et de sa dérivée ou des mesures de débit d'air à une plage d'une cartographie dérivée/température ou débit/température prédéterminée d'au moins une première plage de fonctionnement, représentative de l'état de fonctionnement non amorcé du catalyseur, et une seconde plage de fonctionnement, représentative de l'état de fonctionnement amorcé du catalyseur.
- des moyens (38) de pilotage adaptés pour piloter la commutation entre lesdites première et seconde valeurs d'amorçage et d'entretien de l'état d'amorcé en fonction de l'état de fonctionnement estimé conformément à une loi prédéterminée de commutation.

2. Système selon la revendication 1, **caractérisé en ce qu'**il comprend des moyens (40) de formation de la dérivée temporelle de la mesure de la température en aval du catalyseur et en outre des moyens (22, 26) d'acquisition de paramètres de fonctionnement du moteur et/ou de roulage de véhicule et des moyens (44, 46) de correction de la cartographie dérivée/température prédéterminée en fonction des paramètres acquis.

3. Système selon la revendication 2, **caractérisé en ce que** les moyens (22, 26) d'acquisition de paramètres de fonctionnement du moteur et/ou de roulage du véhicule sont adaptés pour mesurer la température extérieure du véhicule, et **en ce que** les moyens (44,46) de correction sont adaptés pour corriger la cartographie dérivée/température en fonction de la température extérieure mesurée.

4. Système selon la revendication 2 ou 3, **caractérisé en ce que** les moyens (22, 26) d'acquisition de paramètres de fonctionnement du moteur et/ou de roulage du véhicule sont adaptés pour mesurer la vitesse du véhicule, et **en ce que** les moyens (46) de correction de la cartographie dérivée/température sont adaptés pour corriger la cartographie dérivée/température prédéterminée en fonction de la vitesse du véhicule mesurée.

5. Système selon la revendication 1, **caractérisé en ce qu'**il comprend des moyens (20) de mesure du débit d'air en entrée du moteur et **en ce qu'**il comprend en outre des moyens (22, 26) d'acquisition de paramètres de fonctionnement du moteur et/ou de roulage de véhicule et des moyens (52, 54) de correction de la cartographie débit/température prédéterminée en fonction des paramètres acquis.

6. Système selon la revendication 5, **caractérisé en ce que** les moyens (22, 26) d'acquisition de paramètres de fonctionnement du moteur et/ou de roulage du véhicule sont adaptés pour mesurer la température extérieure de véhicule, et **en ce que** les moyens (52, 54) de correction de la cartographie débit/température sont adaptés pour corriger la cartographie débit/température en fonction de la température extérieure mesurée.

7. Système selon la revendication 5 ou 6, **caractérisé en ce que** les moyens (26) d'acquisition de paramètres de fonctionnement du moteur et/ou de roulage du véhicule sont adaptés pour mesurer la vitesse du véhicule, et **en ce que** les moyens (54) de correction de la cartographie débit/température sont adaptés pour corriger la cartographie débit/température en fonction de la vitesse du véhicule mesurée.

8. Système selon l'une quelconque des revendications précédentes, **caractérisé en ce que** les moyens (6, 7) de dépollution comprennent, en aval du catalyseur (6) et du capteur (18) dé température, un filtre à particules (7) devant être régénéré régulièrement et/ou périodiquement, le catalyseur (6) étant propre, dans son état de fonctionnement amorcé, à augmenter la température du filtre à particules pour faciliter sa régénération par combustion des particules piégées dans celui-ci, et **en ce que** les moyens (38) de pilotage sont adaptés pour au moins optimiser la régénération du filtre à particule.

9. Système selon l'une quelconque des revendications 1 à 8, **caractérisé en ce que** les moyens (6, 7) de dépollution comprennent, en aval du catalyseur (6) et du capteur (18) de température, un piège à NOx devant être régénéré régulièrement et/ou périodiquement, le catalyseur (6) étant propre, dans son état de fonctionnement amorcé, à augmenter la température du piège à NOx pour faciliter sa régénération par combustion des particules piégées dans celui-ci, et **en ce que** les moyens (38) de pilotage sont adaptés pour au moins optimiser la régénération du piège à NOx.

10. Système selon la revendication 8 ou 9, caractérisé en les moyens (38) de pilotage sont adaptés pour piloter la commutation entre lesdites première et seconde valeurs d'amorçage et d'entretien l'état amorcé selon une loi de transition prédéterminée qui maximise un critère prédéterminé du type Qc/Qp, où Oc est quantité de chaleur dégagée en aval du catalyseur (6) par celui-ci et Qp la quantité de polluants émis par le catalyseur (6), afin de minimiser la quantité de polluant émis par le catalyseur tout en maximisant la quantité de chaleur dégagée par celui-ci.

11. Système selon l'une quelconque des revendications précédentes, **caractérisé en ce que** les moyens (19) de commande comprennent des moyens (64) de forçage de l'injection de carburant dans les cylindre lors de leur phase de détente à la première valeur d'amorçage du catalyseur dès qu'un ralenti du moteur a duré au moins une durée limite de ralenti prédéterminée, et ce pendant une durée de forçage prédéterminé après l'instant de fin d'un tel ralenti du moteur.

12. Système selon la revendication 11, **caractérisé en ce que** les moyens (64) de forçage comprennent des moyens (70, 72, 74, 88, 90) de détermination de la durée limite de ralenti en fonction de la mesure de la température en aval du catalyseur à l'instant du début du ralenti.

13. Système selon la revendication 12, **caractérisé en ce que** les moyens (70, 72, 74) de détermination de la durée limite de ralenti comprennent des moyens (70) d'acquisition de l'instant de début du ralenti ; et des moyens (74) formant cartographie de durées limites de ralenti adaptés, à l'acquisition de l'instant du début du ralenti, pour déterminer la durée limite de ralenti en évaluant, pour la mesure de la température en aval du catalyseur à l'instant du début de ralenti, une cartographie prédéterminée de valeurs de durée de ralenti en fonction de valeurs de température en aval du catalyseur.

14. Système selon la revendication 13, **caractérisé en ce que** les moyens (70, 72, 74) de détermination de la durée limite de ralenti comprennent en outre des moyens (88, 90) de correction de la cartographie prédéterminée de valeurs de durée de ralenti en fonction de paramètres prédéterminés de fonctionnement du moteur et/ou de roulage du véhicule.

15. Système selon la revendication 14, **caractérisé en ce que** les moyens (88, 90) de correction de la cartographie prédéterminée de valeurs de durée de ralenti sont adaptés pour acquérir la température extérieure du véhicule et/ou de la vitesse du véhicule à l'instant de début du ralenti et pour corriger la cartographie prédéterminée de valeurs de durée de ralenti en fonction de cette température extérieure acquise et/ou de cette mesure de la vitesse acquise.

16. Système selon l'une quelconque des revendications 11 à 15, **caractérisé en ce que** les moyens (64) de forçage comprennent des moyens de détermination (82, 84, 92, 94) de la durée limite de forçage en fonction de la mesure de la température en aval du catalyseur à l'instant de fin du ralenti.

17. Système selon la revendication 16, **caractérisé en ce que** les moyens (82, 84, 92, 94) de détermination de la durée limite de forçage comprennent des moyens (70) d'acquisition de l'instant de fin du ralenti ; et des moyens (84) formant cartographie de durée de forçage adaptés, à l'instant de fin du ralenti, pour déterminer la durée de forçage en évaluant, pour la mesure de la température en aval du catalyseur à l'instant de fin du ralenti, une cartographie prédéterminée de valeurs de durée de forçage en fonction de valeurs de température en aval du catalyseur.

18. Système selon la revendication 17, **caractérisé en ce que** les moyens (82, 84, 92, 94) de détermination de la durée limite de forçage comprennent en outre des moyens (92, 94) de correction de la cartographie prédéterminée de valeurs de durée de forçage en fonction de paramètres prédéterminés de fonctionnement du moteur et/ou de roulage du véhicule.

19. Système selon la revendication 18, **caractérisé en ce que** les moyens (92, 94) de correction de la cartographie prédéterminée de valeurs de durée de forçage sont adaptés pour acquérir la température extérieure du véhicule et/ou la vitesse du véhicule à l'instant de fin du ralenti et pour corriger, la cartographie prédéterminée de valeurs de durée de forçage en fonction de cette température extérieure du véhicule acquise et/ou de cette mesure de la vitesse du véhicule acquise.

20. Système selon l'une quelconque des revendications précédentes, caractérisé en qu'il comprend en outre des moyens de diagnostic de l'état de fonctionnement du capteur de température en aval du catalyseur, et en ce que les moyens de pilotage sont adaptés pour mettre en oeuvre une stratégie prédéterminée de commutation par défaut si le capteur de température est diagnostiqué comme défaillant.

## Claims

1. A system for controlling the operation of a diesel engine (1) of a motor vehicle associated with depollution means (6, 7) comprising an oxidation catalyst (6) and arranged in an exhaust line (3) of this engine (1), this catalyst (6) having at least a non-initialized operating state and an initialized operating state, and this engine (1) being also associated with means (8) for supplying fuel to the cylinders thereof according to at least one injection during their expansion phase, **characterized in that** it comprises:
- a single temperature sensor (18) placed in the exhaust line (3) of the engine downstream of the catalyst (6) to measure the temperature downstream of the catalyst;
- means (19) for controlling the means (8) for supplying fuel to the cylinders adapted to control the commutation of the phasing and/or of the amount of fuel injected during the expansion phase between a first initialization value of the catalyst and a second initialized operating state-maintaining value of the catalyst as a function of the measurement of the temperature downstream of the catalyst,
- means (30) for estimating the operating state of the catalyst (6) as a function of the temperature downstream of the catalyst, the said estimating means comprising means (40) for forming the time derivative of the temperature measurement downstream of the catalyst or means (20) for measuring the flow of air at the inlet of the engine and means (42, 50) forming a derivative/temperature or flow/temperature map adapted to estimate the operating state of the catalyst as a function of the belonging of the temperature measurement downstream of the catalyst and of its derivative or of air flow measurements to a range of a predetermined derivative/temperature or flow/temperature map of at least a first operating range, representative of the non-initialized operating state of the catalyst, and a second operating range, representative of the initialized operating state of the catalyst,
- driving means (38) adapted to drive the commutation between said first and second initialization and initialized state-maintaining values as a function of the operating state estimated according to a predetermined commutation law.

2. The system according to Claim 1, **characterized in that** it comprises means (40) for forming the time derivative of the temperature measurement downstream of the catalyst and in addition means (22, 26) for acquiring operating parameters of the engine and/or driving parameters of the vehicle, and means (44, 46) for correcting the predetermined derivative/temperature map as a function of the acquired parameters.

3. The system according to Claim 2, **characterized in that** the means (22, 26) for acquiring operating parameters of the engine and/or driving parameters of the vehicle are adapted to measure the exterior temperature of the vehicle, and **in that** the correction means (44, 46) are adapted to correct the derivative/temperature map as a function of the measured exterior temperature.

4. The system according to Claim 2 or 3, **characterized in that** the means (22, 26) for acquiring operating parameters of the engine and/or driving parameters of the vehicle are adapted to measure the speed of the vehicle, and **in that** the means (46) for correcting the derivative/temperature map are adapted to correct the predetermined derivative/temperature map as a function of the measured speed of the vehicle.

5. The system according to Claim 1, **characterized in that** it comprises means (20) for measuring the air flow at the inlet of the engine and **in that** it further comprises means (22, 26) for acquiring operating parameters of the engine and/or driving parameters of the vehicle and means (52, 54) for correcting the predetermined flow/temperature map as a function of the acquired parameters.

6. The system according to Claim 5, **characterized in that** the means (22, 26) for acquiring operating parameters of the engine and/or driving parameters of the vehicle are adapted to measure the exterior temperature of the vehicle, and **in that** the means (52, 54) for correcting the flow/temperature map are adapted to correct the flow/temperature map as a function of the measured exterior temperature.

7. The system according to Claim 5 or 6, **characterized in that** the means (26) for acquiring operating parameters of the engine and/or driving parameters of the vehicle are adapted to measure the speed of the vehicle, and **in that** the means (54) for correcting the flow/temperature map are adapted to correct the flow/temperature map as a function of the measured speed of the vehicle.

8. The system according to any one of the preceding claims, **characterized in that** the depollution means (6, 7) comprise, downstream of the catalyst (6) and of the temperature sensor (18), a particle filter (7) which must be regenerated regularly and/or periodically, the catalyst (6) being suited, in its initialized operating state, to increase the temperature of the particle filter to facilitate its regeneration by combustion of the particles trapped therein, and **in that** the driving means (38) are adapted to at least optimize the regeneration of the particle filter.

9. The system according to any one of Claims 1 to 8, **characterized in that** the depollution means (6, 7) comprise, downstream of the catalyst (6) and of the temperature sensor (18), a NOx trap which must be regenerated regularly and/or periodically, the catalyst (6) being suited, in its initialized operating state, to increase the temperature of the NOx trap to facilitate its regeneration by combustion of the particles trapped therein, and **in that** the driving means (38) are adapted to at least optimize the regeneration of the NOx trap.

10. The system according to Claim 8 or 9, **characterized in that** the driving means (38) are adapted to drive the commutation between the said first and second initialization and initialized state-maintaining values according to a predetermined transition law which maximizes a predetermined criterion of the type Qc/Qp, where Qc is the amount of heat released downstream of the catalyst (6) by the latter, and Qp is the amount of pollutants emitted by the catalyst (6), so as to minimize the amount of pollutant emitted by the catalyst whilst maximizing the amount of heat released by the latter.

11. The system according to any one of the preceding claims, **characterized in that** the control means (19) comprise means (64) for forcing the injection of fuel into the cylinders during their expansion phase at the first initialization value of the catalyst as soon as an idle of the engine has lasted at least a predetermined threshold idle duration, this being during a predetermined forcing duration after the instant of the end of such an idle of the engine.

12. The system according to Claim 11, **characterized in that** the forcing means (64) comprise means (70, 72, 74, 88, 90) for determining the threshold idle duration as a function of the measurement of the temperature downstream of the catalyst at the instant of the start of the idle.

13. The system according to Claim 12, **characterized in that** the means (70, 72, 74) for determining the threshold idle duration comprise means (70) for acquiring the instant of the start of the idle; and means (74) forming a map of adapted threshold idle durations, at the acquisition of the instant of the start of the idle, to determine the threshold idle duration by evaluating, for the measurement of the temperature downstream of the catalyst at the instant of the start of the idle, a predetermined map of idle duration values as a function of temperature values downstream of the catalyst.

14. The system according to Claim 13, **characterized in that** the means (70, 72, 74) for determining the threshold idle duration additionally comprise means (88, 90) for correcting the predetermined map of idle duration values as a function of predetermined operating parameters of the engine and/or driving parameters of the vehicle.

15. The system according to Claim 14, **characterized in that** the means (88, 90) for correcting the predetermined map of idle duration values are adapted to acquire the exterior temperature of the vehicle and/or the speed of the vehicle at the instant of the start of the idle and to correct the predetermined map of idle duration values as a function of this acquired exterior temperature and/or of this acquired speed measurement.

16. The system according to any one of Claims 11 to 15, **characterized in that** the forcing means (64) comprise means (82, 84, 92, 94) for determining the threshold forcing duration as a function of the measurement of the temperature downstream of the catalyst at the instant of the end of the idle.

17. The system according to Claim 16, **characterized in that** the means (82, 84, 92, 94) for determining the threshold forcing duration comprise means (70) for acquiring the instant of the end of the idle; and means (84) forming a forcing duration map adapted, at the instant of the end of the idle, to determine the forcing duration by evaluating, for the measurement of the temperature downstream of the catalyst at the instant of the end of the idle, a predetermined map of forcing duration values as a function of temperature values downstream of the catalyst.

18. The system according to Claim 17, **characterized in that** the means (82, 84, 92, 94) for determining the threshold forcing duration comprise in addition means (92, 94) for correcting the predetermined map of forcing duration values as a function of predetermined operating parameters of the engine and/or driving parameters of the vehicle.

19. The system according to Claim 18, **characterized in that** the means (92, 94) for correcting the predetermined map of forcing duration values are adapted to acquire the exterior temperature of the vehicle and/or the speed of the vehicle at the instant of the end of the idle and to correct the predetermined map of forcing duration values as a function of this acquired exterior temperature of the vehicle and/or of this acquired measurement of the speed of the vehicle.

20. The system according to any one of the preceding claims, **characterized in that** it additionally comprises means for diagnosing the operating state of the temperature sensor downstream of the catalyst, and **in that** the driving means are adapted to implement a predetermined commutation strategy by default if the temperature sensor is diagnosed as faulty.

## Patentansprüche

1. System zur Steuerung der Arbeitsweise eines Dieselmotors (1) eines Kraftfahrzeugs, das mit Mitteln (6, 7) zur Schadstoffreinigung versehen ist, die einen Oxidationskatalysator (6) umfassen und die in einer Auspuffanlage (3) dieses Motors (1) eingerichtet sind, wobei dieser Katalysator (6) mindestens einen nicht angesaugten Arbeitszustand und einen angesaugten Arbeitszustand aufweist, und wobei dieser Motor (1) auch mit Mitteln (8) zum Versorgen mit Kraftstoff seiner Zylinder gemäß mindestens einer Injektion während eines Expansionstakts verbunden ist, **dadurch gekennzeichnet, dass** er Folgendes aufweist:
- einen einzigen Temperatursensor (18), der in der Auspuffanlage (3) des Motors stromabwärts des Katalysators (6) platziert ist, um die Temperatur stromabwärts des Katalysators zu messen;
- Mittel (19) zum Steuern der Kraftstoffversorgungsmittel (8) der Zylinder, die angepasst sind, um die Umschaltung der Taktfolge und/oder die beim Expansionstakt injizierte Kraftstoffmenge zwischen einem ersten Ansaugwert des Katalysators und einem zweiten Erhaltungswert des angesaugten Arbeitszustands des Katalysators in Abhängigkeit von der Messung der Temperatur stromabwärts des Katalysators zu steuern,
- Mittel (30) zum Schätzen des Arbeitszustands des Katalysators (6) in Abhängigkeit von der Temperatur stromabwärts des Katalysators, wobei die Schätzmittel Mittel (40) zum Bilden der zeitlichen Drift der Temperaturmessung am Eingang des Motors stromabwärts des Katalysators aufweisen oder Mittel (20) zum Messen des Luftdurchsatzes am Einlass des Motors und Mittel (42, 50), die eine Kartografie Drift/Temperatur oder Durchfluss/Temperatur aufweisen, die angepasst sind, um den Arbeitszustand des Katalysators in Abhängigkeit von der Zugehörigkeit der Temperaturmessung stromabwärts des Katalysators und seiner Drift oder in Abhängigkeit von den Luftdurchflussmessungen zu einem Bereich einer vorbestimmten Kartografie Drift/Temperatur oder Durchfluss/Temperatur, mindestens eines ersten Arbeitsbereichs zu schätzen, der für den nicht angesaugten Arbeitszustand des Katalysators repräsentativ ist, und einen zweiten Arbeitsbereich, der für den angesaugten Arbeitszustand des Katalysators repräsentativ ist,
- Steuermittel (38), die angepasst sind, um das Umschalten zwischen dem ersten Ansaugwert und dem zweiten Erhaltungswert des angesaugten Zustands in Abhängigkeit von dem geschätzten Arbeitszustand gemäß einem vorbestimmten Umschaltgesetz zu steuern.

2. System nach Anspruch 1, **dadurch gekennzeichnet, dass** es Mittel (40) zum Bilden der zeitlichen Drift der Messung der Temperatur stromabwärts des Katalysators und ferner Mittel (22, 26) zum Erfassen von Arbeitsparametern des Motors und/oder des Fahrzeugfahrens sowie Mittel (44, 46) zum Korrigieren der vorbestimmten Kartografie Drift/Temperatur in Abhängigkeit von den erfassten Parametern aufweist.

3. System nach Anspruch 2, **dadurch gekennzeichnet, dass** die Mittel (22, 26) zum Erfassen von Arbeitsparametern des Motors und/oder Fahrparametern des Fahrzeugs angepasst sind, um die Außentemperatur des Fahrzeugs zu messen, und dass die Korrekturmittel (44, 46) angepasst sind, um die Kartografie Drift/Temperatur in Abhängigkeit von der gemessenen Außentemperatur zu korrigieren.

4. System nach Anspruch 2 oder 3, **dadurch gekennzeichnet, dass** die Mittel (22, 26) zum Erfassen von Arbeitsparametern des Motors und/oder von Fahrparametern des Fahrzeugs angepasst sind, um die Geschwindigkeit des Fahrzeugs zu messen, und dass die Korrekturmittel (46) der Kartografie Drift/Temperatur angepasst sind, um die vorbestimmte Kartografie Drift/Temperatur in Abhängigkeit von der gemessenen Geschwindigkeit des Fahrzeugs zu korrigieren.

5. System nach Anspruch 1, **dadurch gekennzeichnet, dass** es Mittel (20) zum Messen des Luftdurchsatzes am Einlass des Motors aufweist, und dass es ferner Mittel (22, 26) zum Erfassen von Arbeitsparametern des Motors und/oder Fahrparametern des Fahrzeugs sowie Mittel (52, 54) zum Korrigieren der vorbestimmten Kartografie Durchfluss/Temperatur in Abhängigkeit von den erfassten Parametern aufweist.

6. System nach Anspruch 5, **dadurch gekennzeichnet, dass** die Mittel (22, 26) zum Erfassen von Arbeitsparametern des Motors und/oder von Fahrparametern des Fahrzeugs angepasst sind, um die Fahrzeugaußentemperatur zu messen, und dass die Mittel (52, 54) zum Korrigieren der Kartografie Durchfluss/Temperatur angepasst sind, um die Kartografie Durchfluss/Temperatur in Abhängigkeit von der gemessenen Außentemperatur zu korrigieren.

7. System nach Anspruch 5 oder 6, **dadurch gekennzeichnet, dass** die Mittel (26) zum Erfassen von Arbeitsparametern des Motors und/oder von Fahrparametern des Fahrzeugs angepasst sind, um die Geschwindigkeit des Fahrzeugs zu messen, und dass die Mittel (54) zum Korrigieren der Kartografie Durchfluss/Temperatur angepasst sind, um die Kartografie Durchfluss/Temperatur in Abhängigkeit von der gemessenen Geschwindigkeit des Fahrzeugs zu korrigieren.

8. System nach einem der vorhergehenden Ansprüche, **dadurch gekennzeichnet, dass** die Mittel (6, 7) zur Schadstoffreinigung stromabwärts des Katalysators (6) und des Temperatursensors (18) ein Partikelfilter (7) aufweisen, das regelmäßig oder periodisch regeneriert werden muss, wobei der Katalysator (6) in seinem angesaugten Arbeitszustand die Temperatur des Partikelfilters erhöhen kann, um sein Regenerieren durch Verbrennen der in diesem gefangenen Partikel zu erleichtern, und dass die Steuermittel (38) angepasst sind, um mindestens die Regenerierung des Partikelfilters zu optimieren.

9. System nach einem der Ansprüche 1 bis 8, **dadurch gekennzeichnet, dass** die Mittel (6, 7) zur Schadstoffreinigung stromabwärts des Katalysators (6) und des Temperatursensors (18) eine NOx-Falle aufweisen, die regelmäßig und/oder periodisch regeneriert werden muss, wobei der Katalysator (6) in seinem angesaugten Arbeitszustand in der Lage ist, die Temperatur der NOx-Falle zu erhöhen, um ihre Regenerierung durch Verbrennen der in dieser gefangenen Partikel zu erleichtern, und dass die Steuermittel (38) angepasst sind, um mindestens die Regenerierung der NOx-Falle zu optimieren.

10. System nach Anspruch 8 oder 9, **dadurch gekennzeichnet, dass** die Steuermittel (38) angepasst sind, um die Umschaltung zwischen dem ersten Ansaugwert und dem zweiten Erhaltungswert des angesaugten Zustands gemäß einem vorbestimmten Übergangsgesetz zu steuern, das ein vorbestimmtes Kriterium des Typs Qc/Qp maximiert, wobei Qc die Menge der stromabwärts des Katalysators (6) von diesem freigesetzte Wärme ist und Qp die Menge an Schadstoffen ist, die von dem Katalysator (6) abgegeben wird, um die Schadstoffmenge, die von dem Katalysator abgegeben wird unter Maximieren der von diesem freigesetzten Wärmemenge zu minimieren.

11. System nach einem der vorhergehenden Ansprüche, **dadurch gekennzeichnet, dass** die Steuermittel (19) Mittel (64) zum Forcieren der Injektion von Kraftstoff in die Zylinder bei ihrer Expansionsphase auf den ersten Ansaugwert des Katalysators aufweisen, sobald ein Leerlauf des Motors weniger als eine vorbestimmte Leerlaufgrenzdauer gedauert hat, und dies während einer vorbestimmten Forcierungsdauer nach dem Endaugenblick eines derartigen Leerlaufs des Motors.

12. System nach Anspruch 11, **dadurch gekennzeichnet, dass** die Mittel (64) zum Forcieren Mittel (70, 72, 74, 88, 90) zum Bestimmen der Leerlaufgrenzdauer in Abhängigkeit von der Messung der Temperatur stromabwärts des Katalysators im Augenblick des Leerlaufbeginns aufweisen.

13. System nach Anspruch 12, **dadurch gekennzeichnet, dass** die Mittel (70, 72, 74) zum Bestimmen der Leerlaufgrenzdauer Mittel (70) zum Erfassen des Anfangsaugenblicks des Leerlaufs aufweisen und Mittel (74), die eine Kartografie der angepassten Leerlaufgrenzdauern beim Erfassen des Anfangsaugenblicks des Leerlaufs, um die Leerlaufgrenzdauer zu bestimmen, indem für die Messung der Temperatur stromabwärts des Katalysators im Anfangsaugenblick des Leerlaufs eine vorbestimmte Kartografie von Laufdauerwerten in Abhängigkeit von Temperaturwerten stromabwärts des Katalysators geschätzt wird.

14. System nach Anspruch 13, **dadurch gekennzeichnet, dass** die Mittel (70, 72, 74) zum Bestimmen der Leerlaufgrenzdauer ferner Mittel (88, 90) zum Korrigieren der vorbestimmten Kartografie von Leerlaufdauerwerten in Abhängigkeit von vorbestimmten Arbeitsparametern des Motors und/oder Fahrparametern des Fahrzeugs aufweisen.

15. System nach Anspruch 14, **dadurch gekennzeichnet, dass** die Mittel (88, 90) zum Korrigieren der vorbestimmten Kartografie von Leerlaufdauerwerten angepasst sind, um die Außentemperatur des Fahrzeugs und/oder die Geschwindigkeit des Fahrzeugs in dem Anfangsaugenblick des Leerlaufs zu erfassen und um die vorbestimmte Kartografie von Leerlaufdauerwerten in Abhängigkeit von dieser erfassten Außentemperatur und/oder erfassten Geschwindigkeitsmessung zu korrigieren.

16. System nach einem der Ansprüche 11 bis 15, **dadurch gekennzeichnet, dass** die Mittel (64) zum Forcieren Mittel (82, 84, 92, 94) zum Bestimmen der Forciergrenzdauer in Abhängigkeit von der Messung der Temperatur stromabwärts des Katalysators im Endaugenblick des Leerlaufs aufweisen.

17. System nach Anspruch 16, **dadurch gekennzeichnet, dass** die Mittel (82, 84, 92, 94) zum Bestimmen der Forciergrenzdauer Mittel (70) zum Erfassen des Endaugenblicks des Leerlaufs aufweisen, und Mittel (84), die eine Forcierdauerkartografie bilden, die angepasst ist, um in dem Endaugenblick des Leerlaufs die Forcierdauer zu bestimmen, indem für die Temperaturmessung stromabwärts des Katalysators im Endaugenblick des Leerlaufs eine vorbestimmte Kartografie von Forcierdauerwerten in Abhängigkeit von Temperaturwerten stromaufwärts des Katalysators geschätzt wird.

18. System nach Anspruch 17, **dadurch gekennzeichnet, dass** die Mittel (82, 84, 92, 94) zum Bestimmen der Forciergrenzdauer ferner Mittel (92, 94) zum Korrigieren der vorbestimmten Kartografie von Forcierdauerwerten in Abhängigkeit von vorbestimmten Arbeitsparametern des Motors und/oder Fahrparametern des Fahrzeugs aufweisen.

19. System nach Anspruch 18, **dadurch gekennzeichnet, dass** die Mittel (92, 94) zum Korrigieren der vorbestimmten Kartografie von Forcierdauerwerten angepasst sind, um die Außentemperatur des Fahrzeugs und/oder die Geschwindigkeit des Fahrzeugs in dem Endaugenblick des Leerlaufs zu erfassen und um die vorbestimmte Kartografie von Forcierdauerwerten in Abhängigkeit von dieser erfassten Außentemperatur des Fahrzeugs und/oder dieser erfassten Messung der Geschwindigkeit des Fahrzeugs zu korrigieren.

20. System nach einem der vorhergehenden Ansprüche, **dadurch gekennzeichnet, dass** es ferner Mittel zur Diagnose des Arbeitszustands des Temperatursensors stromabwärts des Katalysators aufweist, und dass die Steuermittel angepasst sind, um eine vorbestimmte Standardumschaltstrategie umzusetzen, falls der Temperatursensor als ausgefallen diagnostiziert wird.
